# EUROPÄISCHE PATENTSCHRIFT

(11) **EP 3 997 017 B1**
(45) Veröffentlichungstag und Bekanntmachung des Hinweises auf die Patenterteilung: **19.07.2023**
(21) Anmeldenummer: 20728908.3
(22) Anmeldetag: 13.05.2020
(51) Int. Cl.: B65G 21/20

(54) **VORRICHTUNG ZUM GEFÜHRTEN FÖRDERN EINER PROFILLEISTE**
DEVICE FOR CONVEYING A PROFILED STRIP IN A GUIDED MANNER
DISPOSITIF DESTINÉ AU TRANSPORT GUIDÉ D'UNE BARRE PROFILÉE

(30) Priorität: 08.07.2019 AT 506232019
(43) Veröffentlichungstag der Anmeldung: 18.05.2022
(73) Patentinhaber: Neuhofer, Franz, 4893 Zell am Moos (AT)
(72) Erfinder: Neuhofer, Franz, 4893 Zell am Moos (AT)
(74) Vertreter: Hübscher & Partner Patentanwälte GmbH
(86) Internationale Anmeldenummer: PCT/AT2020/060199
(87) Internationale Veröffentlichungsnummer: WO 2021/003504

(56) Entgegenhaltungen:
- EP-A1- 2 868 478
- DE-A1- 10 038 005

## Beschreibung

### Technisches Gebiet

Die Erfindung bezieht sich auf eine Vorrichtung zum geführten Fördern einer Profilleiste in Längsrichtung mit einem die Profilleiste aufnehmenden Förderer, mit die Profilleiste an den Förderer andrückenden Andrückrollen und mit quer zum Förderer verstellbaren Seitenführungen für die Profilleiste.

### Stand der Technik

Um eine Profilleiste in weitgehender Übereinstimmung mit einer Druckvorlage digital in einer hohen Druckqualität bedrucken zu können, ist es nicht nur notwendig, die einzelnen Druckköpfe voneinander unabhängig gegenüber der Profilleiste auszurichten und hinsichtlich des für das Druckbild maßgebenden Ausstoßes der Tintentröpfchen aus den Düsen der Druckköpfe anzusteuern, sondern auch erforderlich, für eine genaue relative Bewegung der Druckköpfe gegenüber der Profilleiste in deren Längsrichtung zu sorgen. Zu diesem Zweck ist es bekannt (EP 2 868 478 A1), die Profilleiste mithilfe von Spannmitteln an einem starren Träger festzuklemmen, damit der gerade Verlauf der Profilleiste während des Bedruckens sichergestellt werden kann, und zwar unabhängig davon, ob der Träger mit der aufgespannten Profilleiste gegenüber den während des Druckens festgehaltenen Druckköpfen oder die Druckköpfe gegenüber dem festgehaltenen Träger in Längsrichtung der Profilleiste verfahren werden. Das Aufspannen der zu bedruckenden Profilleiste auf einem Träger gewährleistet zwar einen geraden Verlauf der Profilleiste, ist jedoch mit einem erheblichen Konstruktions- und Handhabungsaufwand verbunden.

Um diesen Aufwand zu vermeiden, werden die zu bedruckenden Profilleisten mithilfe eines Förderers an den ausgerichteten Druckköpfen vorbeigeführt, wobei Seitenführungen ein Verlaufen der Profilleiste auf dem Förderer und Andrückrollen ein Abheben der Profilleiste vom Förderer verhindern sollen. Es hat sich jedoch herausgestellt, dass diese Maßnahmen nicht für einen genauen, ausgerichteten Verlauf der Profilleiste ausreichen, insbesondere wenn die Profilleiste aus Holz oder Kunststoff gefertigt ist und keine ebene Auflagefläche besitzt. In diesen Fällen besteht nämlich die Gefahr, dass bei einem ausreichenden Druck der Andrückrollen die Profilleiste zwischen den Auflagebereichen durchgebogen wird, bei einem zu geringen Auflagedruck jedoch zwischen den aufeinanderfolgenden Andrückrollen zumindest teilweise unter einer Verwindung vom Förderer abhebt.

DE 100 38 005 A1 offenbart eine Vorrichtung zum geführten Fördern einer Profilleiste in Längsrichtung nach dem Oberbegriff des Anspruchs 1.

### Darstellung der Erfindung

Der Erfindung liegt somit die Aufgabe zugrunde, eine Vorrichtung zum geführten Fördern einer Profilleiste in Längsrichtung so auszubilden, dass mit einem vergleichsweise geringen Konstruktions- und Handhabungsaufwand eine Geradführung für die Profilleiste sichergestellt werden kann.

Ausgehend von einer Vorrichtung der eingangs geschilderten Art löst die Erfindung die gestellte Aufgabe dadurch, dass der Förderer zwischen zwei je für sich senkrecht zu ihrer Auflagefläche verstellbaren Längsrandabstützungen für die Profilleiste angeordnet ist.

Durch die Maßnahme, die Profilleiste nicht nur auf einem Förderer, sondern zusätzlich randseitig auf seitlich neben dem Förderer angeordneten Längsrandabstützungen zu lagern, die voneinander unabhängig senkrecht zu ihrer Auflagefläche verstellbar sind, wird es in einfacher Weise möglich, die Profilleiste, selbst bei einem erheblich gekrümmten Profil, weitgehend frei von Biegemomenten und damit von Biegespannungen auf dem Förderer und den beiden seitlichen Längsrandabstützungen ausgerichtet und gespannt so zu führen, dass ein gerader Verlauf der Profilleiste gesichert werden kann, ohne eine Verformung des Leistenprofils befürchten zu müssen. Die Auflagebereiche auf dem Förderer und den seitlichen Längsrandabstützungen können ja durch die voneinander unabhängige Verstellung der beiden Längsrandabstützungen gegenüber dem Förderer an den Verlauf des Leistenprofils im Bereich der dem Förderer zugekehrten Seite der Profilleiste angepasst werden.

Die Längsrandabstützungen für die Profilleiste können konstruktiv vorteilhaft als Rollgänge ausgebildet werden, deren Rollen in Trägern gelagert sind, die entsprechend der jeweiligen Profilform der Profilleiste senkrecht zur Förderfläche der Rollen gegenüber dem Förderer eingestellt werden.

Der Förderer selbst kann unterschiedlich ausgeführt werden, weil es nur darauf ankommt, die Profilleiste in einem mittleren Profilbereich abzustützen und in Längsrichtung zu fördern. Einfache Konstruktionsverhältnisse ergeben sich allerdings, wenn der Förderer ein umlaufendes Endlosband aufweist, dessen die Profilleiste aufnehmendes Fördertrum zumindest im Bereich der Andrückrollen unterstütz sein soll, um einen geraden Verlauf der Profilleiste gewährleisten zu können.

### Kurze Beschreibung der Erfindung

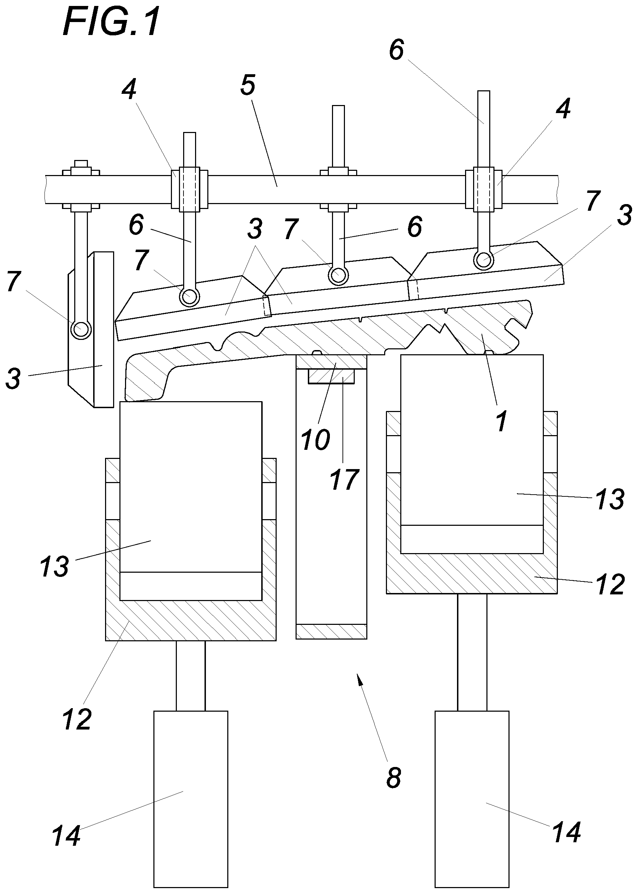

In der Zeichnung ist der Erfindungsgegenstand beispielsweise dargestellt. Es zeigen
- Fig. 1: eine erfindungsgemäße Vorrichtung zum geführten Fördern einer Profilleiste in einem schematischen Querschnitt,

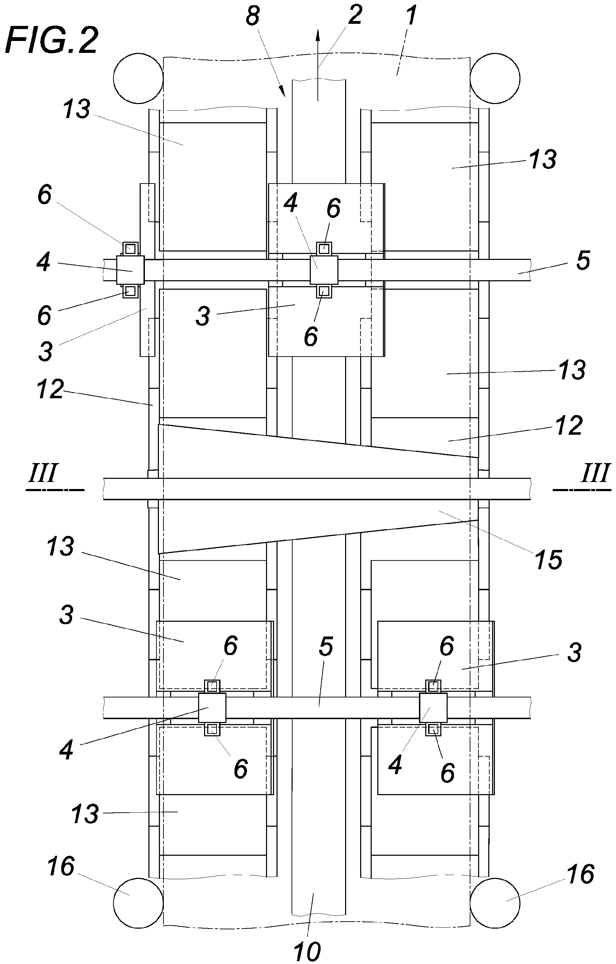

- Fig. 2: diese Vorrichtung in einer Draufsicht in einem kleineren Maßstab und

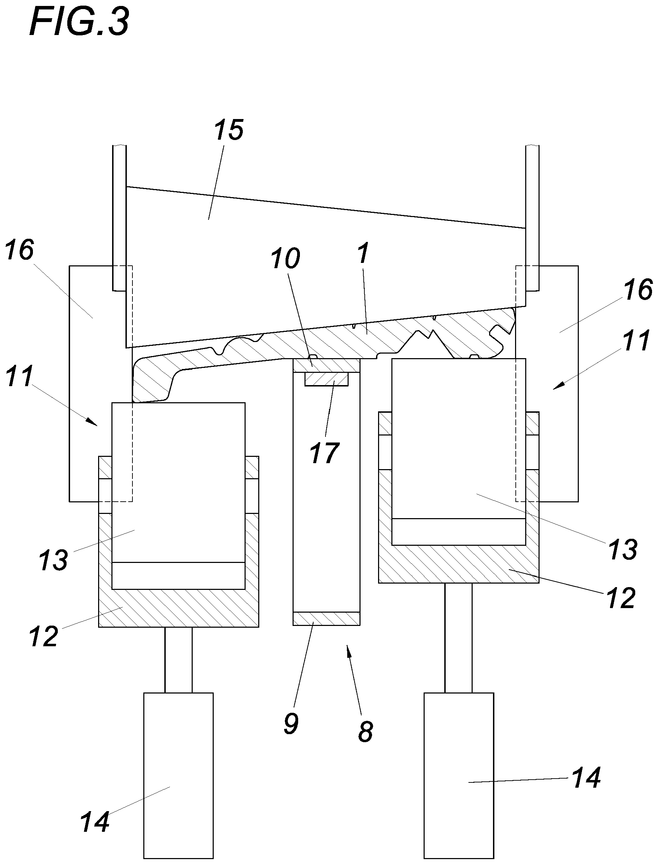

- Fig. 3: einen Schnitt nach der Linie III-III der Fig. 2 in einem größeren Maßstab.

### Wege zur Ausführung der Erfindung

Eine erfindungsgemäße Vorrichtung zum geführten Fördern einer Profilleiste 1 in Längsrichtung 2 eignet sich insbesondere zum Bedrucken der Profilleisten 1. Eine Profilleiste 1 wird zu diesem Zweck mithilfe dieser Vorrichtung in Längsrichtung 2 an Druckköpfen 3 vorbeibewegt, die während des Druckvorgangs ortsfest gehalten werden. Zur Ausrichtung der Druckköpfe 3 gegenüber der Profilleiste 1 müssen die Druckköpfe 3 jedoch voneinander unabhängig in einer zur Längsrichtung 2 senkrechten Ebene entlang von zwei Koordinatenachsen verlagerbar und zusätzlich um eine zur Längsachse 2 parallele Achse drehverstellbar sein. Dies wird gemäß dem Ausführungsbeispiel dadurch erreicht, dass die Druckköpfe 3 in Schlitten 4 der Höhe nach verschiebbar geführt sind, die entlang einer senkrecht zu Längsrichtung 2 ausgerichteten Horizontalführung 5 verstellbar sind. Da die Druckköpfe 3 auf den der Höhe nach im Schlitten 4 verlagerbaren Hubarmen 6 um eine zur Längsrichtung 2 parallele Achse 7 drehverstellbar gelagert sind, können die einzelnen paarweise gegeneinander in Längsrichtung 2 versetzten Druckköpfe 3 gegenüber der Profilleiste 1 den jeweiligen Anforderungen entsprechend ausgerichtet werden.

Die Profilleiste 1 muss allerdings gegenüber den ausgerichteten Druckköpfen 3 ausgerichtet und verformungsfrei gefördert werden. Die hierfür eingesetzte Vorrichtung umfasst einen Förderer 8 in Form eines um Umlenkrollen geführten, umlaufenden Endlosbandes 9, das zwischen zwei seitlichen neben dem Fördertrum 10 des Endlosbandes 9 vorgesehenen Rollgängen 11 angeordnet ist, die eine Längsrandabstützung für die Profilleiste 1 bilden. Diese Rollgänge 11, die in zum Endlosband 9 parallelen Schienen 12 gelagerte Rollen 13 umfassen, können mithilfe von Stelltrieben 14 voneinander unabhängig der Höhe nach verlagert werden, also senkrecht zu ihrer Förderfläche. Durch diese Verstellmöglichkeiten der Rollgänge 11 gegenüber dem Förderer 8 wird es möglich, die Profilleiste 1 nicht nur im mittleren Bereich des Profils auf dem Förderer 8, sondern zusätzlich auch im Bereich der Längsränder über die Rollgänge 11 so abzustützen, dass beim Andrücken der Profilleiste 1 an die durch den Förderer 8 und die Rollgänge 11 gebildete Unterstützung durch elastische Andrückrollen 15 kein für eine Durchbiegung des Profils ausreichendes Biegemoment auf das Profil ausgeübt werden kann, und zwar trotz einer für die Geradführung der Profilleiste 1 ausreichenden Andrückkraft. Es genügt daher, die Ausrichtung der Profilleiste 1 in Längsrichtung 2 durch seitliche Führungsrollen 16 zu sichern, die quer zum Förderer 8 an die Längsränder der Profilleiste 1 angestellt werden.

Damit das Fördertrum 10 des Endlosbandes 9 die durch die Andrückrollen 15 auf die Profilleiste 1 aufgebrachten Druckkräfte aufnehmen kann, ist dem Fördertrum 10 zumindest im Bereich der Andrückrollen 15 ein Stützträger 17 zugeordnet. Die Andruckrollen 15, die über die Länge des Förderers 8 verteilt angeordnet sind, sind über Stelltriebe an die auf dem Förderer 8 aufliegende Profilleiste 1 anstellbar. Diese Stelltriebe sind jedoch aus Übersichtlichkeitsgründen nicht dargestellt, wie auch die Stelltriebe für die durch die Führungsrollen 16 gebildeten Seitenführungen nicht gezeigt sind.

## Patentansprüche

1. Vorrichtung zum geführten Fördern einer Profilleiste (1) in Längsrichtung (2) mit einem die Profilleiste (1) aufnehmenden Förderer (8) und mit die Profilleiste (1) an den Förderer (8) andrückenden Andrückrollen (15), **dadurch gekennzeichnet dass** die Vorrichtung quer zum Förderer (8) verstellbare Seitenführungen (16) für die Profilleiste (1) aufweist, und dass der Förderer (8) zwischen zwei je für sich senkrecht zu ihrer Auflagefläche verstellbaren Längsrandabstützungen für die Profilleiste (1) angeordnet ist.

2. Vorrichtung nach Anspruch 1, **dadurch gekennzeichnet, dass** die Längsrandabstützungen für die Profilleiste (1) deren Längsränder aufnehmende Rollgänge (11) umfassen.

3. Vorrichtung nach Anspruch 1 oder 2, **dadurch gekennzeichnet, dass** der Förderer (8) ein umlaufendes Endlosband (9) aufweist.

## Claims

1. Device for conveying a profiled strip (1) in a guided manner in the longitudinal direction (2), comprising a conveyor (8), which receives the profiled strip (1), and comprising pressing rollers (15) which press the profiled strip (1) against the conveyor (8), **characterised in that** the device has lateral guides (16) for the profiled strip (1) which are adjustable transversely with respect to the conveyor (8), and **in that** the conveyor (8) is arranged between two longitudinal edge supports for the profiled strip (1) which are each adjustable perpendicularly with respect to the bearing surface thereof.

2. Device as claimed in claim 1, **characterised in that** the longitudinal edge supports for the profiled strip (1) comprise roller tables (11) which receive the longitudinal edges thereof.

3. Device as claimed in claim 1 or 2, **characterised in that** the conveyor (8) has a circulating endless belt (9).

## Revendications

1. Dispositif conçu pour le transport guidé d'une barre profilée (1) dans la direction longitudinale (2), comprenant un convoyeur (8) qui reçoit la barre profilée (1) et comprenant des rouleaux de pression (15) pour presser la barre profilée (1) contre le convoyeur (8), **caractérisé en ce que** le dispositif comprend des guides latéraux (16) pour la barre profilée (1) qui sont réglables transversalement par rapport au convoyeur (8), et **en ce que** le convoyeur (8) est disposé entre deux supports de bords longitudinaux pour la barre profilée (1) dont chacun peut être réglé perpendiculairement au niveau de sa surface de support.

2. Dispositif selon la revendication 1, **caractérisé en ce que** les supports de bords longitudinaux pour la barre profilée (1) comprennent des tables à rouleaux (11) qui reçoivent les bords longitudinaux de celle-ci.

3. Dispositif selon la revendication 1 ou 2, **caractérisé en ce que** le convoyeur (8) est pourvu d'une courroie sans fin en circulation (9).
